# EUROPÄISCHE PATENTSCHRIFT

(11) **EP 2 143 184 B1**
(45) Veröffentlichungstag und Bekanntmachung des Hinweises auf die Patenterteilung: **15.06.2016**
(21) Anmeldenummer: 08736632.4
(22) Anmeldetag: 30.04.2008
(51) Int. Cl.: H02H 7/26, H02H 7/30

(54) **VERFAHREN ZUM SELEKTIVEN AUSLÖSEN VON LEISTUNGSSCHALTERN**
METHOD FOR THE SELECTIVE TRIGGERING OF POWER BREAKERS
PROCÉDÉ DE DÉCLENCHEMENT SÉLECTIF D'INTERRUPTEURS DE PUISSANCE

(30) Priorität: 03.05.2007 DE 102007021270
(43) Veröffentlichungstag der Anmeldung: 13.01.2010
(73) Patentinhaber: Siemens Aktiengesellschaft, 80333 München (DE)
(72) Erfinder: MEYER, Jörg, 01309 Dresden (DE); SCHEGNER, Peter, 01259 Dresden (DE)
(86) Internationale Anmeldenummer: PCT/EP2008/055310
(87) Internationale Veröffentlichungsnummer: WO 2008/135479

(56) Entgegenhaltungen:
- WO-A-2006/108860
- GB-A- 2 348 554

## Beschreibung

Die Erfindung betrifft ein Verfahren zum selektiven Auslösen von einem vorgeordneten und mindestens einem diesem nachgeordneten Leistungsschalter gemäß dem Oberbegriff des Anspruchs 1.

Es ist bekannt, Schutzgeräte in Form von Leistungsschaltern im Falle eines Kurzschlusses selektiv auszulösen. Dies bedeutet, dass jeweils der Leistungsschalter auslöst, welcher sich von der Stromeinspeisung aus gesehen am nächsten zum Kurzschluss befindet, so dass nicht mehr Verbraucher als unvermeidbar von der Abschaltung betroffen sind. Die einander vorund nachgeordneten Leistungsschalter unterliegen dazu einer Strom- und Zeitstaffelung; so weisen die einspeisenahen Leistungsschalter jeweils längere Abschaltzeiten als die nachgeordneten auf. Damit wird erreicht, dass die vorgeordneten Leistungsschalter nur dann eine Abschaltung vornehmen, wenn sie sich selbst am nächsten zum Kurzschluss befinden oder in Notfällen, wo ein nachgeordneter Leistungsschalter nicht auslöst, obwohl er auslösen müsste.

Bei einer Strom- und Zeitstaffelung werden die Strom-Zeit-Kennlinien der Leistungsschalter so aufeinander abgestimmt, dass diese im Falle eines Kurzschlusses in Einspeiserichtung gesehen bei immer höheren Strömen und nach immer längeren Zeiten auslösen.

Dies hat den Nachteil, dass die einspeisenahen Leistungsschalter relativ lange Abschaltzeiten aufweisen.

Es ist bekannt, diese relativ langen Abschaltzeiten dadurch zu verkürzen, dass zwischen den Leistungsschaltern eine Kommunikationsverbindung hergestellt wird, mit deren Hilfe nachgeordnete Leistungsschalter den jeweils vorgeordneten Leistungsschaltern signalisieren, ob sie die Abschaltung vornehmen werden. Dafür ist allerdings ein zusätzlicher Verdrahtungsaufwand erforderlich.

Aus der WO 2006/108860 A1 ist ein Verfahren und eine Anordnung zur Erhöhung und Gewährleistung der Selektivität eines Schaltgerätes in einer Gruppe von Schaltgeräten sowie eine Verwendung der Anordnung beim Schalten in Stromkreisen bekannt. Bei einem Verfahren zur Erhöhung und Gewährleistung der Selektivität eines Schaltgerätes in einer Gruppe von Schaltgeraten, wobei der Schaltgerätegruppe wenigstens zwei Stromkreise mit einem ersten, vorgeordneten Schalter und wenigstens einem zweiten, nachgeordneten Schalter zugeordnet sind, werden folgende Maßnahmen durchgeführt: es wird die Impedanz des Stromkreises, der den nachgeordneten Schalter enthält, bestimmt und analysiert, zur Impedanzbestimmung werden die im Stromkreis des vorgeordneten Schalters vorhandenen Elemente des Stromkreises, wie Sammelschienen, Leitungen o. dgl., berücksichtigt, und durch die Impedanzanalyse wird die Selektivität verbessert. Bei der zugehörigen Anordnung zur Erhöhung und Gewährleistung der Selektivität eines Schaltgerätes in einer Gruppe von hintereinander geschalteten Schaltgeräten, wobei in der Schaltgerätegruppe wenigstens ein vorgeordneten Schalter und wenigstens ein nachgeordneten Schalter vorhanden sind, wird zur Selektivitätsbestimmung ein Mikroprozessor verwendet, wobei der Mikroprozessor im vorgeordneten Schalter angeordnet ist.

Die Aufgabe der Erfindung ist es, ein vereinfachtes Verfahren zum selektiven Auslösen anzugeben, das insbesondere auch bei den sehr kurzen Abschaltzeiten der Niederspannungs-Leistungsschalter anwendbar ist.

Die Lösung ist durch die Merkmale des Patentanspruchs 1 gegeben; die Unteransprüche stellen vorteilhafte Ausgestaltungen dar.

Die Lösung sieht vor, dass für den vorgeordneten Leistungsschalter der Schaltlichtbogen vorhanden ist, wenn der vom vorgeordneten Leistungsschalter aus gesehene abgangsseitige ohmsche Widerstand der vom Kurzschluss gebildeten Kurzschlussschleife zeitlich einen exponentiellen Verlauf aufweist. Mit dem Verfahren ist es also möglich, dass der vorgeordnete Leistungsschalter jeweils von sich aus feststellen kann, ob ein nachgeordneter Leistungsschalter einen Schaltlichtbogen erzeugt und damit, ob er bereits abschaltet. In diesem Falle kommt es nicht mehr zu einer dann unerwünschten Abschaltung durch den vorgeordneten Leistungsschalter. Vorteilhafterweise ist für diese Lösung kein zusätzlicher Schaltungsaufwand und auch keine Kommunikation der Leistungsschalter untereinander erforderlich.

Um die Sicherheit beim Erfassen eines Schaltlichtbogens zu erhöhen, wird vorgeschlagen, zusätzlich zu prüfen, ob der exponentielle Verlauf vom Nulldurchgang des Wechselstroms jeweils weiter als ein vorgegebener Zeitwert entfernt verläuft.

Bei Verwendung von Leistungsschaltern mit Back-up-Funktion, die große Kurzschlussströme durch Öffnen der Schaltkontakte ohne Betätigung des Schaltschlosses bereits selbsttätig begrenzen, wird vorgeschlagen, dass der vorgeordnete Leistungsschalter eine Back-up-Funktion aufweist und er diese Back-up-Funktion sowie die abgangsseitige Impedanz überwacht, dass erst nach Aktivierung der Back-up-Funktion und/oder wenn die abgangsseitige Impedanz innerhalb eines vorgegebenen Impedanzbereichs liegt das abgangsseitige Auftreten eines Schaltlichtbogens für eine vorgegebene Zeit überwacht wird und der vorgeordnete Leistungsschalter auslöst, wenn in der vorgegebenen Zeit kein Schaltlichtbogen auftritt.

Alternativ ist es auch möglich, dass anstelle der abgangsseitigen Impedanz ein Strom-Schwellwert überwacht wird.

Eine bessere Anpassung des Verfahrens wird erreicht, wenn die vorgegebene Zeit, vom Kurzschlusseintritt bis zum Erkennen eines nachgeordneten Schaltlichtbogens, stromabhängig ist.

Die Erfindung wird nachfolgend anhand eines Ausführungsbeispiels näher beschrieben. Es zeigen:
- Figur 1: eine schematische Darstellung einer Schaltungsanordnung mit mehreren Leistungsschaltern,
- Figur 2: die Impedanz als Funktion der Zeit für die Schaltungsanordnung nach Figur 1 bei einem Kurzschluss zum Zeitpunkt Null und
- Figur 3: die Schaltungsanordnung von Figur 1 mit mehreren möglichen Kurzschlüssen an unterschiedlichen Orten.

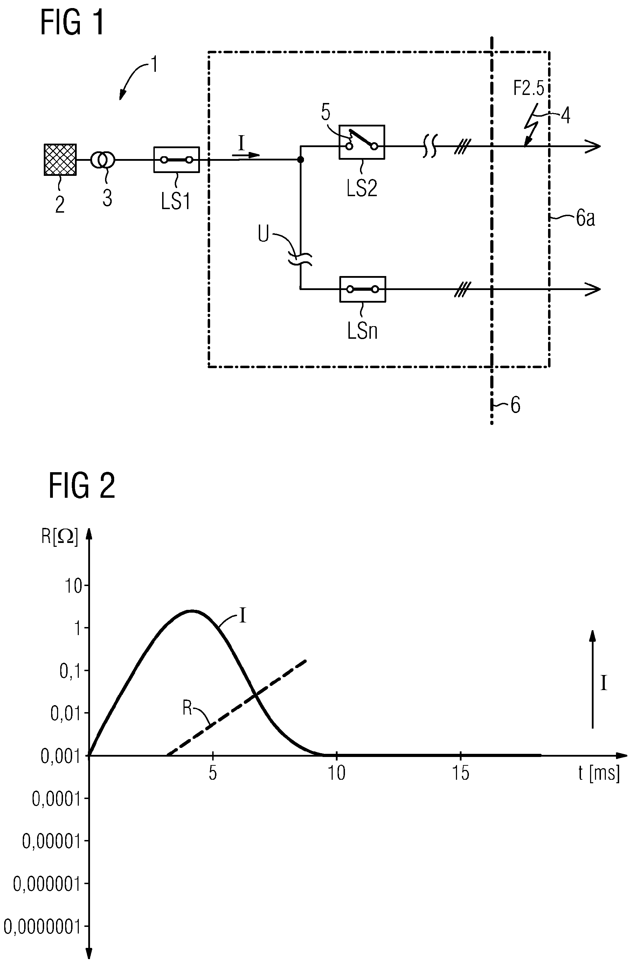

Figur 1 zeigt eine schematische Darstellung einer Schaltungsanordnung mit mehreren Schutzschaltern in Form von Leistungsschaltern LS, von denen in der Figur 1 nur drei Leistungsschalter LS1, LS2, LSn dargestellt sind. Bei den Leistungsschaltern LS handelt es sich um Strom begrenzende Niederspannungs-Leistungsschalter, die sehr kurze und von der Höhe des Kurzschlussstromes abhängige Abschaltzeiten aufweisen. Die Unterbrechung U dient der Vereinfachung der Darstellung der Schaltungsanordnung; sie besagt, dass zwischen den gezeigten Leistungsschaltern LS2 und LSn noch weitere Leistungsschalter LS vorhanden sein können. In der Figur 1 ist weiter eine Stromeinspeisung 1 gezeigt, zu der ein Stromnetz 2 sowie ein Transformator 3 gehören. Der Stromeinspeisung 1 folgt der (einspeisenahe) Leistungsschalter LS1, der den Leistungsschaltern LS2, LSn vorgeordnet ist. Dementsprechend sind die beiden Leistungsschalter LS2, LSn dem Leistungsschalter LS1 nachgeordnet. "Vorgeordnet" und "nachgeordnet" sind jeweils von der Stromeinspeisung 1 aus gesehen definiert.

Ein Pfeil am Fehlerort F2.5 soll anzeigen, dass dort ein Kurzschluss 4 vorliegt. Die Figur 1 zeigt weiter, dass der dem Fehlerort F2.5 am nächsten liegende Leistungsschalter LS2 bereits dabei ist zu öffnen und damit die vom Kurzschluss 4 gebildete Kurzschlussschleife von der Stromeinspeisung 1 zu trennen. Dabei ziehen die sich öffnenden Schaltkontakte des Leistungsschalters LS2 einen in Figur 1 gezeigten Schaltlichtbogen 5, der bei einer weiteren Öffnung der Schaltkontakte gelöscht wird und folglich bei vollständig geöffneten Schaltkontakten wieder erloschen ist.

Der Leistungsschalter LS1 besitzt eine Back-up-Funktion, d.h. er öffnet ebenfalls etwas (zusammen mit dem Leistungsschalter LS2), wenn sich der Kurzschluss 4 von der Stromeinspeisung 1 aus gesehen vor seiner Ansprechschwelle 6 befindet und der Kurzschlussstrom einen Mindestwert überschritten hat. Durch die Back-up-Funktion des Leistungsschalters LS1 wird der fließende Strom I bereits begrenzt.

In der Figur 1 befindet sich der Kurzschluss 4 nicht vor sondern hinter der Ansprechschwelle 6, so dass die Back-up-Funktion des Leistungsschalters LS1 nicht aktiv ist. Weiter befindet sich der Kurzschluss 4 und die Ansprechschwelle 6 innerhalb eines Bereichs 6a, welcher schematisch den Schutz- bzw. Wirkungsbereich des einspeisenahen Leistungsschalters LS1 angibt, d.h. in dem sich die abgangsseitige Impedanz R (s. Figur 2) bei Auftreten eines Kurzschlusses 4 signifikant ändert.

Der vorgeordnete Leistungsschalter LS1 beobachtet (überwacht) jeweils seine Back-up-Funktion (z.B. mittels Photodioden oder Bewegungssensoren) und die abgangsseitige Impedanz, d.h. die vom Leistungsschalter LS1 in Richtung der Leistungsschalter LS2, LSn vorliegende Impedanz. Sie weist einen ohmschen Anteil (ohmscher Widerstand R in Figur 2) als auch einen imaginären Anteil auf. Durch den Kurzschluss 4 verkleinert sich die abgangsseitige Impedanz, da durch den Kurzschluss 4 innerhalb der Schaltungsanordnung eine Kurzschlussschleife entsteht. Der Leistungsschalter LS1 überwacht hier, ob die abgangsseitige Impedanz kleiner als ein vorgegebener Schwellwert ist. Die Überwachung kann aber auch prüfen, ob die Impedanz jeweils innerhalb eines vorgegebenen Impedanzbereichs liegt. In der Schaltungsanordnung in Figur 1 hat die abgangsseitige Impedanz den vorgegebenen Schwellwert unterschritten und vom Zeitpunkt des Unterschreitens an prüft der Leistungsschalter LS1 den abgangsseitigen ohmschen Widerstand R auf exponentiellen Verlauf.

Figur 2 zeigt den ohmschen Anteil (ohmschen Widerstand R) der Impedanz als Funktion der Zeit t für die Schaltungsanordnung gemäß Figur 1. Der Verlauf des abgangsseitigen ohmschen Widerstands R ist dabei aufgrund des Schaltlichtbogens 5 exponentiell (logarithmische Einteilung der Ordinate oder R-Achse in Figur 2) und bricht dann bei 9 ms ab, wobei der unbeeinflusste Wechselstrom I bei 10 ms jeweils seinen Nulldurchgang hätte.

Der Leistungsschalter LS1 prüft, ob der Verlauf des ohmschen Widerstands R exponentiell ist und zusätzlich bis zu einem vorgegebenen Zeitwert (hier 1 ms) vom Nulldurchgang entfernt verläuft, was in Figur 2 der Fall ist.

Andere Störungen können ebenfalls einen exponentiellen Impedanzverlauf bewirken. Allerdings hat sich gezeigt, dass ein von Störungen hervorgerufener exponentieller Impedanzverlauf an den Nulldurchgängen des Wechselstroms I regelmäßig nicht abbricht, sondern vorzugsweise während der Nulldurchgänge vorhanden ist.

In Figur 1 erkennt der Leistungsschalter LS1 anhand des exponentiellen Verlaufs des ohmschen Widerstands R und der Entfernung von mehr als 1 ms vom Nulldurchgang, dass ein Schaltlichtbogen 5 vorhanden ist und er folglich nicht selbst öffnen (abschalten) muss, da ein nachgeordneter Leistungsschalter (hier der Leistungsschalter LS2) bereits dabei ist, zu öffnen.

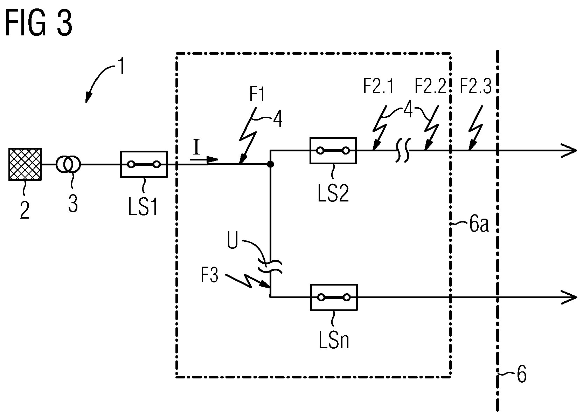

In Figur 3 ist die Schaltungsanordnung von Figur 1 mit mehreren möglichen Kurzschlüssen 4 gezeigt. Die Unterschiede bestehen darin, dass die Kurzschlüsse 4 an unterschiedlichen Fehlerorten F vorhanden sein sollen. Außerdem ist der Leistungsschalter LS2 noch nicht dabei zu öffnen, so dass für die unterhalb der Ansprechschwelle 6 vorhandenen möglichen Kurzschlüsse jeweils die Back-up-Funktion des Leistungsschalters LS1 aktiviert wird, da der Kurzschlussstrom groß genug ist.

Der Leistungsschalter LS1 löst für die Kurzschlüsse 4 an den Fehlerorten F1, F3 nach der vorgegebenen Zeit aus, da diese Kurzschlüsse zwischen dem vorgeordneten und den nachgeordneten Leistungsschaltern LS1 bzw. LS2, LSn liegen und folglich keiner der nachgeordneten Leistungsschalter LS1, LSn abschaltet.

Bei den Kurzschlüssen 4 an den Fehlerorten F2.1, F2.2, F2.3 prüft der Leistungsschalter LS1 nach Erkennen der Aktivierung seiner Back-up-Funktion bzw. nach Erkennen, dass die abgangsseitige Impedanz kleiner als ein vorgegebener Schwellwert ist, den zeitlichen Verlauf der Impedanz, d.h. den ohmschen Widerstand R. Dieser weist hier einen exponentiellen aber keinen durch einen Schaltlichtbogen 5 eines nachgeordneten Leistungsschalters LS2, LSn bedingten exponentiellen Verlauf auf. Das erkennt er hier dadurch, dass dieser exponentiellen Verlauf nicht einen vorgegebenen zeitwert (hier 1 ms) vom Nulldurchgang entfernt verläuft (da dies nur bei Schaltlichtbögen 5 der Fall ist). Wenn der hier zuständige Leistungsschalter LS2 keinen Schaltlichtbogen 5 zieht, er also nicht dabei ist zu öffnen, öffnet der Leistungsschalter LS1 nach Ablauf einer vorgegebenen stromabhängigen Zeit (vollständig). Eine solche Situation kann beispielsweise dadurch eintreten, dass der Leistungsschalter LS2 defekt ist.

Zieht der Leistungsschalter LS2 dagegen innerhalb der vorgegebenen Zeit einen Schaltlichtbogen 5 (in Figur 3 nicht dargestellt), so würde dieser vom Leistungsschalter LS1 erkannt und der Leistungsschalter LS1 würde nicht auslösen, sondern nur der Leistungsschalter LS2.

Für den Fehlerort F2.3 ist der Leistungsschalter LS1 auf die Aktivierung seiner Back-up-Funktion angewiesen, da die vom Leistungsschalter LS1 gemessene Impedanz nicht mehr in dessen Impedanz- und somit Wirkungsbereich liegt (d.h. der Fehlerort F2.3 liegt in den Figuren 1 und 3 außerhalb des Bereichs 6a).

## Patentansprüche

1. Verfahren zum selektiven Auslösen von einem vorgeordneten Leistungsschalter (LS1) und mindestens einem diesem nachgeordneten Leistungsschalter (LS2, LSn),
wobei der vorgeordnete Leistungsschalter (LS1) überwacht, ob der mindestens eine nachgeordnete Leistungsschalter (LS2, LSn) als Folge eines hinter dem nachgeordneten Leistungsschalter (LS2, LSn) aufgetretenen Kurzschlusses (4) bereits unter Bildung eines Schaltlichtbogens (5) dabei ist zu öffnen, und
bei dem der vorgeordnete Leistungsschalter (LS1) selbst nicht auslöst, wenn er abgangsseitig den Schaltlichtbogen (5) erkennt,
**dadurch gekennzeichnet,**
**dass** für den vorgeordneten Leistungsschalter (LS1) der Schaltlichtbogen (5) vorhanden ist, wenn der vom vorgeordneten Leistungsschalter (LS1) aus gesehene abgangsseitige ohmsche Widerstand (R) der vom Kurzschluss (4) gebildeten Kurzschlussschleife zeitlich einen exponentiellen Verlauf aufweist.

2. Verfahren nach Anspruch 1,
**dadurch gekennzeichnet,**
**dass** dieser exponentielle Verlauf vom Nulldurchgang des Wechselstroms (I) jeweils weiter als ein vorgegebener zeitwert entfernt verläuft.

3. Verfahren nach Anspruch 1 oder 2,
**dadurch gekennzeichnet,**
**dass** der vorgeordnete Leistungsschalter (LS1) eine Back-up-Funktion aufweist und er diese Back-up-Funktion sowie die abgangsseitige Impedanz überwacht,
**dass** erst nach Aktivierung der Back-up-Funktion und/oder wenn die abgangsseitige Impedanz innerhalb eines vorgegebenen Impedanzbereichs liegt das abgangsseitige Auftreten eines Schaltlichtbogens (5) für eine vorgegebene Zeit überwacht wird und der vorgeordnete Leistungsschalter (LS1) auslöst, wenn in der vorgegebenen Zeit kein Schaltlichtbogen (5) auftritt.

4. Verfahren nach Anspruch 3,
**dadurch gekennzeichnet,**
**dass** die vorgegebene Zeit stromabhängig ist.

## Claims

1. Method for selectively tripping an upstream circuit-breaker (LS1) and at least one circuit-breaker (LS2, LSn) downstream thereof,
wherein the upstream circuit-breaker (LS1) monitors whether the at least one downstream circuit-breaker (LS2, LSn), as a consequence of a short circuit (4) that occurred downstream of the downstream circuit-breaker (LS2, LSn), is already in the process of opening with the formation of a switching arc (5), and wherein the upstream circuit-breaker (LS1) itself does not trip if it identifies the switching arc (5) on the outgoing side,
**characterized**
**in that** the switching arc (5) is present for the upstream circuit-breaker (LS1) if the outgoing-side ohmic resistance (R) - as viewed from the upstream circuit-breaker (LS1) - of the short-circuit loop formed by the short circuit (4) has an exponential profile over time.

2. Method according to Claim 1,
**characterized**
**in that** said exponential profile progresses in each case further away from the zero crossing of the alternating current (I) than a predefined time value.

3. Method according to Claim 1 or 2,
**characterized**
**in that** the upstream circuit-breaker (LS1) has a backup function and it monitors said backup function and also the outgoing-side impedance,
**in that** it is only after activation of the backup function and/or if the outgoing-side impedance is within a predefined impedance range that the outgoing-side occurrence of a switching arc (5) is monitored for a predefined time and the upstream circuit-breaker (LS1) trips if no switching arc (5) occurs in the predefined time.

4. Method according to Claim 3,
**characterized**
**in that** the predefined time is current-dependent.

## Revendications

1. Procédé de déclenchement sélectif d'un disjoncteur monté en amont (LS1) et d'au moins un disjoncteur (LS2, LSn) monté en aval de celui-ci,
le disjoncteur monté en amont (LS1) surveillant si l'au moins un disjoncteur monté en aval (LS2, LSn) est déjà en train de s'ouvrir, en formant un arc de coupure (5), suite à un court-circuit (4) survenu en arrière du disjoncteur monté en aval (LS2, LSn), et
le disjoncteur monté en amont (LS1) lui-même ne déclenchant pas lorsqu'il détecte l'arc de coupure (5) côté sortie,
**caractérisé en ce que** l'arc de coupure (5) existe, pour le disjoncteur monté en amont (LS1), lorsque la résistance ohmique (R) de la boucle de court-circuit formée par le court-circuit (4), côté sortie du point de vue du disjoncteur monté en amont (LS1), présente une courbe exponentielle dans le temps.

2. Procédé selon la revendication 1,
**caractérisé en ce que** cette courbe exponentielle passe à chaque fois plus loin du passage par zéro du courant alternatif (I) que ne l'est une valeur temporelle prédéfinie.

3. Procédé selon la revendication 1 ou 2,
**caractérisé en ce que** le disjoncteur monté en amont (LS1) présente une fonction de secours et surveille cette fonction de secours ainsi que l'impédance côté sortie,
**en ce que** la survenue, côté sortie, d'un arc de coupure (5) n'est surveillée pour une durée prédéfinie qu'après activation de la fonction de secours et/ou lorsque l'impédance côté sortie se trouve dans un domaine d'impédance prédéfini et le disjoncteur monté en amont (LS1) déclenche lorsqu'aucun arc de coupure (5) ne se produit dans la durée prédéfinie.

4. Procédé selon la revendication 3, **caractérisé en ce que** la durée prédéfinie est fonction du courant.
